# FASCICULE DE BREVET EUROPEEN

(11) **EP 4 491 511 B1**
(45) Date de publication et mention de la délivrance du brevet: **15.04.2026**
(21) Numéro de dépôt: 24179059.1
(22) Date de dépôt: 30.05.2024
(51) Int. Cl.: B64C 25/32, B64D 43/00, G05D 1/437, G05D 1/606, G05D 109/25, G05D 111/50

(54) **PROCÉDÉ D'ORIENTATION AUTOMATIQUE D'UN AÉRONEF**
VERFAHREN ZUR AUTOMATISCHEN AUSRICHTUNG EINES FLUGZEUGS
METHOD FOR AUTOMATICALLY ALIGNING AN AIRCRAFT

(30) Priorité: 19.06.2023 FR 2306266
(43) Date de publication de la demande: 15.01.2025
(73) Titulaire: Airbus (S.A.S.), 31700 Blagnac (FR)
(72) Inventeur: ABDELLI, Kamel, 31700 Blagnac (FR)
(74) Mandataire: Airbus-OPS SAS

(56) Documents cités:
- WO-A1-2022/038385
- US-A1- 2008 283 661
- US-A1- 2016 152 318

## Description

### DOMAINE TECHNIQUE

L'invention concerne le domaine des aéronefs à voilure tournante.

### ETAT DE LA TECHNIQUE ANTERIEURE

D'une manière connue, un aéronef doit préférentiellement décoller face au vent.

En effet, le décollage face au vent augmente la portance et consomme moins d'énergie, tout en étant moins consommateur d'énergie (qu'un décollage par vent arrière ou vent latéral).

Traditionnellement, pour les aéronefs à voilure tournante, l'orientation face au vent se fait en faisant pivoter l'aéronef sur une remorque dans le cas des aéronefs ayant des patins. Sinon, dans le cas des aéronefs comprenant des trains d'atterrissage à roue, l'orientation est réalisée en utilisant le moteur de propulsion et la voilure tournante. Cette manœuvre est délicate et très consommatrice d'énergie.

Dans ce contexte, il est nécessaire de fournir un procédé d'orientation permettant d'orienter automatiquement un aéronef face au vent pour le décollage, tout en consommant peu d'énergie.

Le document US 2008/283661 A1 divulgue un hélicoptère qui repose sur une plateforme mobile à proximité d'une station météorologique située sur un bâtiment. La station météorologique transmet sans fil un signal météorologique représentatif des conditions de vent, notamment la vitesse et la direction. Un récepteur de la plateforme mobile est conçu pour recevoir ce signal météorologique et le transmettre à une unité de commande de la plateforme. Lorsqu'un utilisateur souhaite que la plateforme mobile soit orientée face au vent, il utilise un émetteur pour transmettre un signal sans fil « face au vent » à l'unité de commande. Dès réception du signal « face au vent », l'unité de commande est adaptée pour contrôler chaque roue de la plateforme mobile indépendamment et déplacer la plateforme mobile dans la direction requise pour aligner ladite plateforme mobile face au vent.

### EXPOSE DE L'INVENTION

A cet effet, selon un premier aspect, il est proposé un procédé d'orientation automatique d'un aéronef au sol pour décoller face au vent. L'aéronef comprend un cockpit, une pluralité de trains d'atterrissage comprenant chacun un moteur, au moins un système informatique comprenant de la circuiterie électronique pour piloter les trains d'atterrissage, et au moins une commande manuelle configurée pour transmettre au moins une instruction au système informatique. Le procédé est implémenté par le système informatique et il comprend, lorsque la commande d'activation présente dans le cockpit est activée, les étapes suivantes :
- acquérir des mesures d'orientation et de vitesse du vent autour de l'aéronef ;
- déterminer une direction et un sens d'un axe du vent ;
- commander les moteurs des trains d'atterrissage pour orienter un axe longitudinal de l'aéronef selon une direction parallèle à la direction de l'axe du vent et pour orienter le cockpit face au sens de l'axe du vent ;
- décoller avec l'axe longitudinal de l'aéronef selon une direction parallèle à la direction de l'axe du vent et avec le cockpit face au sens de l'axe du vent.

Selon une disposition particulière, les mesures d'orientation et de vitesse du vent sont acquises par des capteurs embarqués dans l'aéronef.

Ainsi, d'une manière particulièrement astucieuse, le procédé utilise les moteurs des trains d'atterrissage pour orienter automatiquement l'aéronef face au vent. Cette disposition est particulièrement avantageuse car elle permet d'orienter l'aéronef sans qu'il soit nécessaire d'utiliser les moteurs de propulsion en vol (par exemple une hélice ou réacteur) pour orienter l'aéronef. Ainsi, le procédé permet une orientation automatisée de l'aéronef qui est réalisée en consommant peu d'énergie (les moteurs des trains d'atterrissage sont des moteurs électriques nettement moins consommateurs d'énergie que les moteurs utilisés pour propulser l'aéronef en vol). En outre, le procédé selon l'invention permet une orientation rapide et précise de l'aéronef face au vent.

Ainsi, l'invention fournit un procédé d'orientation permettant d'orienter automatiquement un aéronef face au vent pour le décollage, tout en consommant peu d'énergie.

Selon une disposition particulière, les mesures d'orientation et de vitesse du vent sont acquises par des capteurs externes positionnés sur une zone de décollage autour de l'aéronef.

Selon une disposition particulière, les mesures acquises par des capteurs embarqués et les mesures acquises par des capteurs externes sont comparées pour déterminer la direction et la vitesse du vent.

Selon une disposition particulière, l'étape de commande des moteurs comprend une phase consistant à contrôler le roulis, la vitesse et la stabilité de l'aéronef lors de la commande des moteurs des systèmes de déplacement.

Selon un aspect qui n'est pas revendiqué actuellement, il est proposé un train d'atterrissage d'un aéronef pour la mise en œuvre du procédé selon l'invention, le train d'atterrissage comprenant un organe de rétractation et un moteur adapté pour déplacer l'organe de rétractation entre une position rétractée dans laquelle le train d'atterrissage est rentré et une position déployée dans laquelle le train d'atterrissage est sorti, le train d'atterrissage étant caractérisé en ce qu'il comprend un organe de sélection de transmission permettant de transmettre un mouvement du moteur à une roue du train d'atterrissage pour déplacer l'aéronef ou permettant de transmettre un mouvement du moteur à l'organe de rétractation.

Selon un autre aspect qui n'est pas revendiqué actuellement, il est proposé un système informatique comprenant de la circuiterie électronique pour piloter un train d'atterrissage.

Selon un autre aspect qui n'est pas revendiqué actuellement, il est proposé un aéronef comprenant une voilure tournante et comprenant un système informatique.

Selon un autre aspect, il est proposé un produit programme d'ordinateur comprenant des instructions de code de programme pour commander le décollage d'un aéronef selon les étapes du procédé selon l'invention, lorsque lesdites instructions sont exécutées par au moins un processeur.

Selon un autre aspect, il est proposé un support de stockage non transitoire sur lequel est stocké un programme d'ordinateur comprenant des instructions de code de programme pour commander le décollage d'un aéronef selon les étapes du procédé selon l'invention, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un procédé d'orientation automatique d'un aéronef au sol ;
[Fig. 2] illustre schématiquement une portion d'un train d'atterrissage ;
[Fig. 3] illustre schématiquement un système informatique.

### EXPOSE DETAILLE DE MODES DE REALISATION

### Procédé d'orientation automatique d'un aéronef

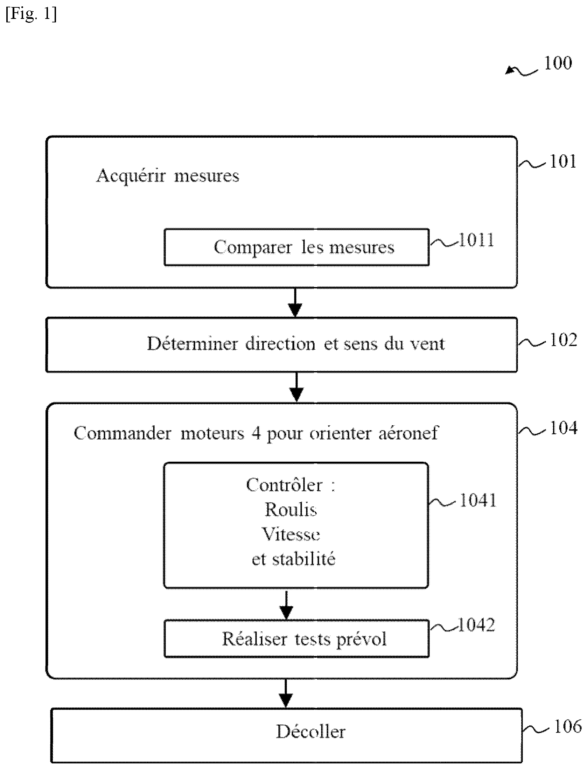

En référence à la Fig. 1, selon un premier aspect, il est proposé un procédé 100 d'orientation automatique d'un aéronef au sol pour décoller face au vent.

D'une manière connue, l'aéronef comprend un cockpit, une pluralité de trains d'atterrissage 2 comprenant chacun un moteur 4, au moins un système informatique 200 comprenant de la circuiterie électronique pour piloter les trains d'atterrissage 2 et au moins une commande manuelle configurée pour transmettre au moins une instruction au système informatique 200.

Lorsque la commande d'activation présente dans le cockpit est activée, le procédé 100 est implémenté par le système informatique 200.

Le procédé 100 comprend les étapes suivantes :
- acquérir 101 des mesures d'orientation et de vitesse du vent autour de l'aéronef ;
- déterminer 102 une direction et un sens d'un axe du vent ;
- commander 104 les moteurs 4 des trains d'atterrissage 2 pour orienter un axe longitudinal de l'aéronef selon une direction parallèle à la direction de l'axe du vent et pour orienter le cockpit face au sens de l'axe du vent ;
- décoller 106 avec l'axe longitudinal de l'aéronef selon une direction parallèle à la direction de l'axe du vent et avec le cockpit face au sens de l'axe du vent.

Ainsi, d'une manière particulièrement astucieuse, le procédé 100 utilise les moteurs 4 des trains d'atterrissage 2 pour orienter l'aéronef face au vent. Cette disposition est particulièrement avantageuse car elle permet d'orienter l'aéronef sans qu'il soit nécessaire d'utiliser les moteurs de propulsion en vol (par exemple une hélice ou réacteur) pour orienter l'aéronef. Ainsi, le procédé 100 permet une orientation automatisée de l'aéronef qui est réalisée en consommant peu d'énergie (les moteurs 4 des trains d'atterrissage 2 sont des moteurs électriques nettement moins consommateurs d'énergie que les moteurs utilisés pour propulser l'aéronef en vol). En outre, le procédé 100 selon l'invention permet une orientation rapide et précise de l'aéronef face au vent.

Plus précisément, selon une disposition particulière, les mesures d'orientation et de vitesse du vent sont acquises par des capteurs embarqués dans l'aéronef.

Selon une autre disposition particulière, les mesures d'orientation et de vitesse du vent sont acquises par des capteurs externes positionnés sur une zone de décollage autour de l'aéronef. Typiquement ces capteurs externes peuvent être des capteurs d'un héliport.

D'une manière avantageuse, les mesures acquises par des capteurs embarqués et les mesures acquises par des capteurs externes sont comparées (phase 1011) pour déterminer la direction et la vitesse du vent. Plus précisément, selon une disposition particulière, les mesures acquises par les capteurs embarqués et les capteurs externes sont filtrées et pondérées avant d'être comparées. D'une manière particulièrement avantageuse, la comparaison 1011 des mesures acquises permet d'écarter d'éventuelles mesures aberrantes (trop éloignées des autres mesures).

Selon une disposition particulière, l'étape 104 de commande des moteurs 4 comprend une phase 1041 consistant à contrôler le roulis, la vitesse et la stabilité de l'aéronef lors de la commande des moteurs 4 des systèmes de déplacement. En d'autres termes, cette phase permet de garantir la stabilité de l'aéronef tout en le faisant pivoter. Il s'agit d'une disposition particulièrement avantageuse car l'aéronef comprend plusieurs trains d'atterrissage 2 et comprend un moteur 4 par train d'atterrissage 2. Il est donc particulièrement avantageux de contrôler le roulis, la vitesse et la stabilité de l'aéronef.

Selon une disposition particulière, l'étape de commande 104 des moteurs comprend une phase 1042 de tests automatiques de pré-vol qui sont effectués sur l'aéronef. Si l'aéronef est un aéronef à voilure tournante, les tests de pré-vol sont réalisés alors que la voilure est en rotation. La nature des tests de pré-vol est connue et ne sera pas détaillée dans le présent document.

### Train d'atterrissage

Selon un autre aspect, il est proposé un train d'atterrissage 2 d'un aéronef pour la mise en œuvre du procédé 100.

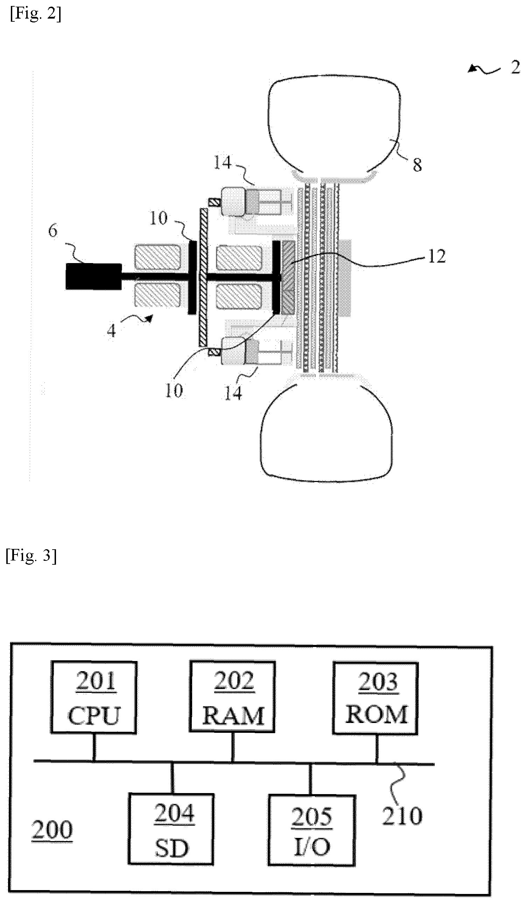

Tel que schématisé sur la Fig. 2, le train d'atterrissage 2 comprend un (ou deux) organe(s) de rétractation 6 et un moteur 4 adapté pour déplacer l'organe de rétractation 6 entre une position rétractée dans laquelle le train d'atterrissage 2 est rentré et une position déployée dans laquelle le train d'atterrissage 2 est sorti. Typiquement, l'organe de rétractation 6 est un vérin passif, actif ou semi-actif. Le vérin comprend deux extrémités. Une première extrémité du vérin est liée au fuselage de l'aéronef et la deuxième extrémité est liée à la roue du train d'atterrissage 2.

Le moteur 4 électrique fixé sur une roue 8 entraîne un déplacement de la deuxième extrémité, ce qui permet de déplacer l'organe de rétractation 6 entre la position rétractée et la position déployée.

D'une manière particulièrement astucieuse, le train d'atterrissage 2 comprend un organe de sélection 10 de transmission permettant de transmettre un mouvement du moteur 4 à une roue du train d'atterrissage 2 pour déplacer l'aéronef ou permettant de transmettre un mouvement du moteur 4 à l'organe de rétractation 6. En d'autres termes, l'organe de sélection 10 permet de transmettre le mouvement du moteur 4 électrique à la roue 8 ou à l'organe de rétractation 6. Typiquement, l'organe de sélection 10 peut être un embrayage mécanique ou magnétique.

En outre, selon le mode de réalisation ici présenté, le train d'atterrissage 2 comprend un réducteur 12 (i.e. un train d'engrenages) interposé entre la roue 8 et le moteur 4. Le réducteur 12 permet de démultiplier le couple transmis par le moteur 4 pour permettre une rotation de la roue 8.

Ainsi, le train d'atterrissage 2 permet de mutualiser le moteur 4 pour rentrer/sortir le train d'atterrissage et pour faire tourner la roue pour orienter l'aéronef face au vent.

En sus, selon le mode de réalisation ici présenté, le train d'atterrissage 2 comprend deux organes de freinage 14 qui permettent de freiner la roue du train d'atterrissage 2.

### Système informatique

Selon un autre aspect, il est proposé un système informatique 200 comprenant de la circuiterie électronique configurée pour implémenter un procédé 100 d'orientation automatique d'un aéronef.

Tel que schématisé sur la Fig. 3, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire à partir de la mémoire vive 202 des instructions et de les exécuter. Ces instructions forment un programme d'ordinateur permettant l'implémentation, par le processeur 201, du procédé 100 et des étapes décrits ici.

Tout ou partie du procédé 100 et des étapes décrites ci-avant peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, les procédé et étapes décrits ci-avant en relation avec le système informatique 200 en question.

### Aéronef

Selon un autre aspect, il est proposé un aéronef comprenant une voilure tournante et comprenant le système informatique 200.

## Revendications

1. Procédé (100) d'orientation automatique d'un aéronef au sol pour décoller face au vent, l'aéronef comprenant un cockpit, une pluralité de trains d'atterrissage (2) comprenant chacun un moteur (4), au moins un système informatique comprenant de la circuiterie électronique pour piloter les trains d'atterrissage (2) et au moins une commande manuelle configurée pour transmettre au moins une instruction au système informatique, le procédé étant implémenté par le système informatique et étant **caractérisé en ce qu'**il comprend, lorsque la commande d'activation présente dans le cockpit est activée, les étapes suivantes :
- acquérir (101) des mesures d'orientation et de vitesse du vent autour de l'aéronef ;
- déterminer (102) une direction et un sens d'un axe du vent ;
- commander (104) les moteurs (4) des trains d'atterrissage pour orienter un axe longitudinal de l'aéronef selon une direction parallèle à la direction de l'axe du vent et pour orienter le cockpit face au sens de l'axe du vent ;
- décoller (106) avec l'axe longitudinal de l'aéronef selon une direction parallèle à la direction de l'axe du vent et avec le cockpit face au sens de l'axe du vent.

2. Procédé (100) selon la revendication 1, dans lequel les mesures d'orientation et de vitesse du vent sont acquises (101) par des capteurs embaqués dans l'aéronef.

3. Procédé (100) selon l'une quelconque des revendications précédentes, dans lequel les mesures d'orientation et de vitesse du vent sont acquises (101) par des capteurs externes positionnés sur une zone de décollage autour de l'aéronef.

4. Procédé selon les revendications 2 et 3 en combinaison, dans lequel les mesures acquises par des capteurs embarqués et les mesures acquises (101) des capteurs externes sont comparées (1011) pour déterminer la direction et la vitesse du vent.

5. Procédé (100) selon les revendications précédentes dans lequel l'étape de commande (104) des moteurs (4) comprend une phase (1041) consistant à contrôler le roulis, la vitesse et la stabilité de l'aéronef lors de la commande des moteurs des systèmes de déplacement.

6. Produit programme d'ordinateur comprenant des instructions de code de programme pour commander le décollage d'un aéronef selon les étapes du procédé (100) selon l'une quelconque des revendications 1 à 5, lorsque lesdites instructions sont exécutées par au moins un processeur (201).

7. Support de stockage non transitoire sur lequel est stocké un programme d'ordinateur comprenant des instructions de code de programme pour commander le décollage d'un aéronef selon les étapes du procédé (100) selon l'une quelconque des revendications 1 à 5, lorsque lesdites instructions sont lues depuis ledit support de stockage non transitoire et exécutées par un processeur (201).

## Patentansprüche

1. Verfahren (100) zur automatischen Ausrichtung eines Luftfahrzeugs am Boden, um gegen den Wind zu starten, das Luftfahrzeug umfassend ein Cockpit, eine Mehrzahl von Fahrwerken (2), die jeweils einen Motor (4) umfassen, mindestens ein Computersystem, das eine elektronische Schaltungsanordnung zum Ansteuern der Fahrwerke (2) umfasst, und mindestens eine manuelle Steuerung, die dazu ausgestaltet ist, mindestens eine Anweisung an das Computersystem zu übermitteln, wobei das Verfahren von dem Computersystem implementiert wird und **dadurch gekennzeichnet ist, dass**, wenn die im Cockpit vorhandene Aktivierungssteuerung aktiviert ist, die folgenden Schritte umfasst:
- Erfassen (101) von Messungen von Ausrichtung und Geschwindigkeit des Windes um das Luftfahrzeug herum;
- Bestimmen (102) einer Richtung und eines Richtungssinns einer Achse des Windes;
- Steuern (104) der Motoren (4) der Fahrwerke, um eine Längsachse des Luftfahrzeugs entlang einer Richtung parallel zu der Richtung der Achse des Windes auszurichten und um das Cockpit gegen den Richtungssinn der Achse des Windes auszurichten;
- Starten (106) mit der Längsachse des Luftfahrzeugs entlang einer Richtung parallel zu der Richtung der Achse des Windes und mit dem Cockpit gegen den Richtungssinn der Achse des Windes.

2. Verfahren (100) nach Anspruch 1, wobei die Messungen von Ausrichtung und Geschwindigkeit des Windes von in das Flugzeug integrierten Sensoren erfasst (101) werden.

3. Verfahren (100) nach einem der vorhergehenden Ansprüche, wobei die Messungen von Ausrichtung und Geschwindigkeit des Windes von externen Sensoren erfasst (101) werden, die in einer Startzone um das Luftfahrzeug herum angeordnet sind.

4. Verfahren nach den Ansprüchen 2 und 3 in Kombination, wobei die von integrierten Sensoren erfassten Messungen und die von externen Sensoren erfassten (101) Messungen verglichen (1011) werden, um die Richtung und die Geschwindigkeit des Windes zu bestimmen.

5. Verfahren (100) nach den vorhergehenden Ansprüchen, wobei der Schritt (104) des Steuerns der Motoren (4) eine Phase (1041) umfasst, die darin besteht, die Rolllage, die Geschwindigkeit und die Stabilität des Luftfahrzeugs beim Steuern der Motoren der Fortbewegungssysteme zu überwachen.

6. Computerprogrammprodukt, das Programmcodeanweisungen umfasst, um das Starten eines Luftfahrzeugs entsprechend den Schritten des Verfahrens (100) nach einem der Ansprüche 1 bis 5 zu steuern, wenn die Anweisungen von mindestens einem Prozessor (201) ausgeführt werden.

7. Nichtflüchtiges Speichermedium, auf dem ein Computerprogramm gespeichert ist, das Programmcodeanweisungen umfasst, um das Starten eines Luftfahrzeugs entsprechend den Schritten des Verfahrens (100) nach einem der Ansprüche 1 bis 5 zu steuern, wenn die Anweisungen von dem nichtflüchtigen Speichermedium gelesen und von einem Prozessor (201) ausgeführt werden.

## Claims

1. Method (100) for automatically orienting an aircraft on the ground to take off into the wind, the aircraft comprising a cockpit, a plurality of landing gears (2) each comprising a power unit (4), at least one computer system comprising electronic circuitry for controlling the landing gears (2) and at least one manual control configured to transmit at least one instruction to the computer system, the method being implemented by the computer system and being **characterized in that**, when the activation control present in the cockpit is activated, it involves performing the following steps:
- acquisition (101) of measurements of the orientation and speed of the wind around the aircraft;
- determination (102) of a direction and sense of the direction of a wind axis;
- commanding (104) the landing gear power units (4) to orient a longitudinal axis of the aircraft in a direction parallel to the direction of the wind axis and to orient the cockpit so that it faces into the sense of the direction of the wind axis;
- take-off (106) with the longitudinal axis of the aircraft in a direction parallel to the direction of the wind axis and with the cockpit facing into the sense of the direction of the wind axis.

2. Method (100) according to Claim 1, wherein the wind orientation and windspeed measurements are acquired (101) by sensors carried on board the aircraft.

3. Method (100) according to any one of the preceding claims, wherein the wind orientation and windspeed measurements are acquired (101) by external sensors positioned on a take-off zone around the aircraft.

4. Method according to Claims 2 and 3 in combination, wherein the measurements acquired by on-board sensors and the measurements acquired (101) from the external sensors are compared (1011) to determine wind direction and windspeed.

5. Method (100) according to the preceding claims wherein the step of commanding (104) the power units (4) comprises a phase (1041) consisting in controlling the roll, speed and stability of the aircraft when commanding the power units of the movement systems.

6. Computer program product comprising program code instructions for controlling the take-off of an aircraft according to the steps of the method (100) according to any one of Claims 1 to 5, when said instructions are executed by at least one processor (201).

7. Non-transient storage medium on which is stored a computer program comprising program code instructions for controlling the take-off of an aircraft according to the steps of the method (100) according to any one of Claims 1 to 5, when said instructions are read from said non-transient storage medium and executed by a processor (201).
